# EUROPEAN PATENT APPLICATION

(11) **EP 4 322 633 A1**
(43) Date of publication of application: **14.02.2024**
(21) Application number: 22190011.1
(22) Date of filing: 11.08.2022
(51) Int. Cl.: H04W 64/00, H04W 4/02, H04W 8/00, H04L 41/50, H04L 67/51, H04W 76/15

(54) **METHOD AND APPARATUS FOR TRANSMITTING INFORMATION**

(71) Applicant: Robert Bosch GmbH, 70442 Stuttgart (DE)
(72) Inventor: Hassan, Khaled Shawky, 30880 Laatzen (DE); Stark, Maximilian, 20249 Hamburg (DE)

(57) **Abstract**

A method, for example a computer-implemented method, comprising: transmitting, by a network device, a first information to a first terminal device, the first information instructing the first terminal device to perform at least one sidelink-based positioning procedure associated with at least one further terminal device, receiving second information from at least one of a) the first terminal device and b) the at least one further terminal device, the second information characterizing at least one result of the at least one sidelink-based positioning procedure.

## Description

### Technical Field

The disclosure relates to a method of transmitting, by a network device, a first information to a first terminal device.

The disclosure further relates to an apparatus for transmitting a first information to a first terminal device.

### Summary

Exemplary embodiments relate to a method, for example a computer-implemented method, comprising: transmitting, by a network device, a first information to a first terminal device, the first information instructing the first terminal device to perform at least one sidelink-based positioning procedure associated with at least one further terminal device, receiving a second information from at least one of a) the first terminal device and b) the at least one further terminal device, the second information characterizing at least one result of the at least one sidelink-based positioning procedure. In some exemplary embodiments, the second information may be used to validate position information as may e.g. be obtained by at least one further positioning procedure, and/or to refine already existing position information.

In some exemplary embodiments, the first terminal device and/or the at least one further terminal device can e.g. be used with a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device and/or the at least one further terminal device may be a user equipment (UE) or a data transceiver modem, which, for example, may be associated with a mobile object such as e.g. a vehicle, for example car or truck or the like.

In some exemplary embodiments, the first terminal device and/or the at least one further terminal device may be at least one of: an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some exemplary embodiments, the network device is a base station, e.g. for a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the network device may e.g. be a gNB.

In some exemplary embodiments, the method comprises: performing, by the network device, at least one, for example non-sidelink based, positioning procedure, e.g. based on an air interface, e.g. Uu-interface according to some accepted standard, associated with the network device and the first terminal device, determining, based on the at least one, for example non-sidelink based, positioning procedure, at least one of: a) the at least one, for example non-sidelink based, positioning procedure was not successful ("first determination"), b) at least one accuracy requirement was not met by the at least one, for example non-sidelink based, positioning procedure ("second determination").

In some exemplary embodiments, based on at least one of the first determination and the second determination, at least one of the above-mentioned actions may be carried out, such as e.g. transmitting the first information.

In some exemplary embodiments, the method comprises at least one of the following aspects: a) determining, by the network device, at least one further terminal device that may at least temporarily be used as a reference terminal device (e.g., anchor terminal device, as e.g. defined by some accepted standard) for the sidelink-based positioning procedure, b) instructing, by the network device, at least one further terminal device, e.g. the at least one further terminal device (e.g., anchor terminal device, as e.g. defined by some accepted standard), that may at least temporarily be used as a reference terminal device for the sidelink-based positioning procedure, to perform at least one of: b1) transmitting, for example repeatedly, for example periodically, discovery signals for a discovery procedure associated with the first terminal device, b2) preparing for a, for example on-demand, discovery for a discovery procedure associated with the first terminal device, c) transmitting, by the network device, discovery configuration information characterizing a configuration for a discovery procedure for the sidelink-based positioning procedure, d) verifying, by the network device, a capability of at least one further terminal device for a sidelink-based positioning procedure.

In some exemplary embodiments, the first information comprises at least one of the following elements: a) resources for a sidelink-based direct discovery, b) a periodicity of the resources for the sidelink-based direct discovery, c) a sidelink switching time characterizing a switching time associated with sidelink transmissions, d) a time gap characterizing a time which the terminal device is active performing the positioning procedure, e) a periodicity associated with the time gap, f) a scheme for the sidelink-based positioning procedure, e.g. indicating whether relative positions and/or absolute positions are considered for the sidelink-based positioning procedure, g) resources for the sidelink-based positioning procedure, h) pattern information characterizing a pattern of at least one reference signal for the sidelink-based positioning procedure, i) configuration information associated with a pattern of at least one reference signal for the sidelink-based positioning procedure, e.g. other than the pattern information.

Further exemplary embodiments relate to an apparatus, for example for a network device, for performing the method according to the embodiments, e.g. as defined by at least one of the claims 1 to 4.

Further exemplary embodiments relate to an apparatus, for example for a network device, comprising means for performing the method according to the embodiments, e.g. as defined by at least one of the claims 1 to 4.

In some exemplary embodiments, the apparatus and/or its functionality may e.g. be provided within the network device. In some exemplary embodiments, the apparatus and/or its functionality may e.g. be provided outside of the network device, e.g. in form of a, for example separate, device, that may e.g. be at least temporarily coupled with the network device.

Further exemplary embodiments relate to a method, for example a computer-implemented method, comprising: receiving, by a first terminal device, a first information from a network device, the first information instructing the first terminal device to perform at least one sidelink-based positioning procedure associated with at least one further terminal device, performing, by the first terminal device, the at least one sidelink-based positioning procedure associated with the at least one further terminal device, e.g. based on the first information.

In some exemplary embodiments, the first terminal device may e.g. be a terminal device a position of which is to be determined, e.g. a target terminal device, e.g. target UE, e.g. according to some accepted standard.

In some exemplary embodiments, the method comprises: transmitting, by the first terminal device, second information, for example at least a part of the second information, to the network device, the second information characterizing at least one result of the at least one sidelink-based positioning procedure.

In some exemplary embodiments, the method comprises determining, by the first terminal device, the at least one further terminal device, e.g. in a communication range of the first terminal device.

In some exemplary embodiments, the method comprises receiving, by the first terminal device, discovery configuration information characterizing a configuration for a discovery procedure for the sidelink-based positioning procedure.

In some exemplary embodiments, the first information comprises, as e.g. already mentioned above, at least one of the following elements: a) resources for a sidelink-based direct discovery, b) a periodicity of the resources for the sidelink-based direct discovery, c) a sidelink switching time characterizing a switching time associated with sidelink transmissions, d) a time gap characterizing a time which the terminal device is active performing the positioning procedure, e) a periodicity associated with the time gap, f) a scheme for the sidelink-based positioning procedure, e.g. indicating whether relative positions and/or absolute positions are considered for the sidelink-based positioning procedure, g) resources for the sidelink-based positioning procedure, h) pattern information characterizing a pattern of at least one reference signal for the sidelink-based positioning procedure, i) configuration information associated with a pattern of at least one reference signal for the sidelink-based positioning procedure, e.g. other than the pattern information.

Further exemplary embodiments relate to an apparatus, for example for a first terminal device, for performing the method according to the embodiments, e.g. as defined by at least one of the claims 7 to 11.

Further exemplary embodiments relate to an apparatus, for example for a first terminal device, comprising means for performing the method according the embodiments, e.g. as defined by at least one of the claims 7 to 11.

Further exemplary embodiments relate to a method, for example a computer-implemented method, comprising at least one of a) at least temporarily supporting, by at least one terminal device, for example by at least one further terminal device, a first terminal device in performing at least one sidelink-based positioning procedure associated with the at least one terminal device, for example associated with the at least one further terminal device, b) transmitting, by the at least one terminal device, for example by the at least one further terminal device, second information, for example at least a part of the second information, to a network device, the second information characterizing at least one result of the at least one sidelink-based positioning procedure.

In some exemplary embodiments, the at least one terminal device, e.g. the at least one further terminal device, may e.g. be a terminal device a (for example absolute or at least relative) position of which is known, e.g. a reference terminal device, e.g. reference UE, e.g. anchor terminal device, e.g. anchor UE, e.g. according to some accepted standard.

In some exemplary embodiments, the method comprises: receiving, by the at least one terminal device, for example by at least one further terminal device, sidelink-related instructions, e.g. from a network device, the sidelink-related instructions instructing the at least one terminal device to perform at least one of: a) a sidelink positioning direct discovery procedure, b) a sidelink positioning procedure, c) transmitting, for example repeatedly, for example periodically, transmitting sidelink discovery signals, d) preparing for an on-demand transmission of discovery signals, wherein for example the method further comprises controlling an operation of the at least one terminal device, for example of the at least one further terminal device, based on the sidelink-related instructions.

Further exemplary embodiments relate to an apparatus, for example for a terminal device, for example for at least one further terminal device, for performing the method according to the embodiments, e.g. as defined by at least one of the claims 14 to 15.

Further exemplary embodiments relate to an apparatus, for example for a terminal device, for example for at least one further terminal device, comprising means for performing the method according the embodiments, e.g. as defined by at least one of the claims 14 to 15.

Further exemplary embodiments relate to a wireless, for example cellular, communication system comprising at least one apparatus according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the communication system according to the embodiments and/or of the computer program according to the embodiments and/or of the computer-readable storage medium according to the embodiments and/or of the data carrier signal according to the embodiments for at least one of: a) performing at least one sidelink-based positioning procedure, b) assisting a network device in performing at least one positioning procedure, c) validating at least one positioning procedure associated with a network device, e.g. based on the at least one sidelink-based positioning procedure, d) increasing a precision of at least one positioning procedure associated with a network device, e.g. based on the at least one sidelink-based positioning procedure, e) performing hybrid positioning associated with at least one network device and at least one terminal device, f) employing sidelink ranging capabilities of at least one terminal device, e.g. for positioning, g) increasing a flexibility of hybrid positioning associated with at least one network device and at least one terminal device, h) performing on-demand sidelink-based positioning upon request of at least one network device, i) providing positioning capabilities to communications networks, e.g. associated with car-to-car communication and/or communication of Industrial Internet of Things, IIoT, device and/or vehicle-to-X, V2X, communication.

### Brief Description of Exemplary Figures

Some exemplary embodiments will now be described with reference to the accompanying drawings, in which:
- Fig. 1: schematically depicts a simplified flow-chart according to exemplary embodiments,
- Fig. 2: schematically depicts a simplified block diagram according to exemplary embodiments,
- Fig. 3: schematically depicts a simplified flow-chart according to exemplary embodiments,
- Fig. 4: schematically depicts a simplified block diagram according to exemplary embodiments,
- Fig. 5: schematically depicts a simplified flow-chart according to exemplary embodiments,
- Fig. 6: schematically depicts a simplified flow-chart according to exemplary embodiments,
- Fig. 7: schematically depicts a simplified flow-chart according to exemplary embodiments,
- Fig. 8: schematically depicts a simplified flow-chart according to exemplary embodiments,
- Fig. 9: schematically depicts a simplified flow-chart according to exemplary embodiments,
- Fig. 10: schematically depicts a simplified block diagram according to exemplary embodiments,
- Fig. 11: schematically depicts a simplified scenario according to exemplary embodiments,
- Fig. 12: schematically depicts a simplified signaling diagram according to exemplary embodiments,
- Fig. 13: schematically depicts a simplified signaling diagram according to exemplary embodiments,
- Fig. 14: schematically depicts a simplified scenario according to exemplary embodiments,
- Fig. 15: schematically depicts a simplified signaling diagram according to exemplary embodiments,
- Fig. 16: schematically depicts aspects of use according to exemplary embodiments.

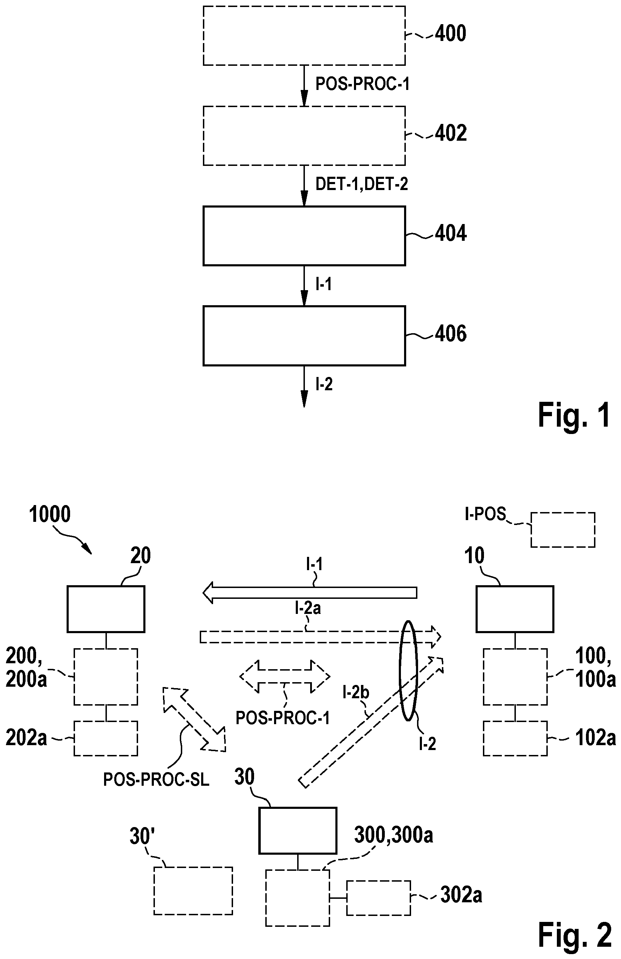

Exemplary embodiments, see for example Fig. 1, relate to a method, for example a computer-implemented method, comprising: transmitting 404, by a network device 10 (Fig. 2), a first information 1-1 to a first terminal device 20, the first information 1-1 instructing the first terminal device 20 to perform at least one sidelink-based positioning procedure POS-PROC-SL associated with at least one further terminal device 30, 30', receiving 406 (Fig. 1) a second information I-2 from at least one of a) the first terminal device 20 and b) the at least one further terminal device 30, 30', the second information I-2 characterizing at least one result of the at least one sidelink-based positioning procedure POS-PROC-SL. In some exemplary embodiments, the second information I-2 may be used to validate position information I-POS as may e.g. be obtained by at least one further positioning procedure POS-PROC-1, and/or to refine already existing position information I-POS.

In some exemplary embodiments, the first terminal device 20 and/or the at least one further terminal device 30, 30' can e.g. be used with a wireless, for example cellular, communications system 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device 20 and/or the at least one further terminal device 30, 30' may be a user equipment (UE) or a data transceiver modem, which, for example, may be associated with a mobile object such as e.g. a vehicle, for example car or truck or the like.

In some exemplary embodiments, the first terminal device 20 and/or the at least one further terminal device 30, 30' may be at least one of: an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some exemplary embodiments, the network device 10 is a base station, e.g. for a wireless, for example cellular, communications system 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the network device 10 may e.g. be a gNB.

In some exemplary embodiments, Fig. 1, the method comprises: performing 400, by the network device 10, at least one, for example non-sidelink based, positioning procedure POS-PROC-1, e.g. based on an air interface, e.g. Uu-interface according to some accepted standard, associated with the network device 10 and the first terminal device 20, determining 402 (Fig. 1), based on the at least one, for example non-sidelink based, positioning procedure POS-PROC-1, at least one of: a) the at least one, for example non-sidelink based, positioning procedure was not successful ("first determination" DET-1), b) at least one accuracy requirement was not met by the at least one, for example non-sidelink based, positioning procedure ("second determination" DET-2).

In some exemplary embodiments, based on at least one of the first determination DET-1 and the second determination DET-2, at least one of the above-mentioned actions 404, 406 may be carried out, such as e.g. transmitting 404 the first information 1-1.

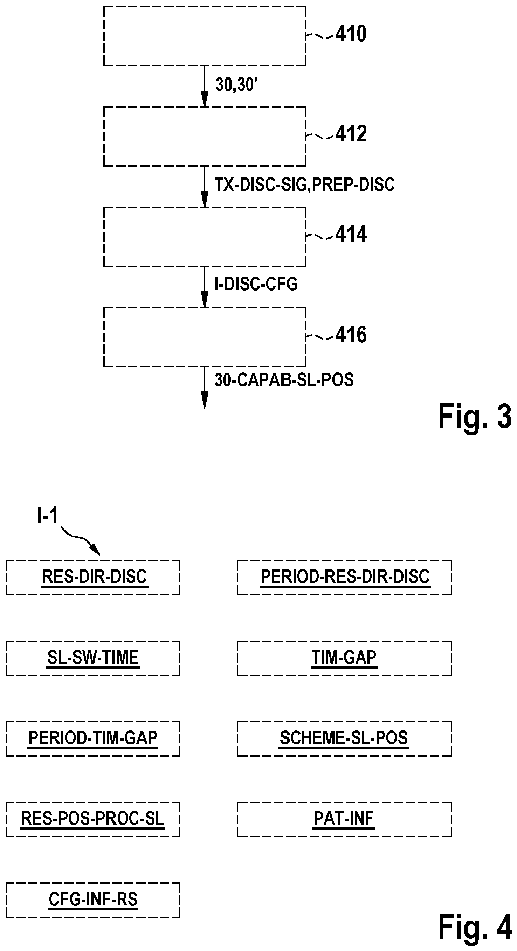

In some exemplary embodiments, Fig. 3, the method comprises at least one of the following aspects: a) determining 410, by the network device 10 (Fig. 2), at least one further terminal device 30, 30' that may at least temporarily be used as a reference terminal device (e.g., anchor terminal device, as e.g. defined by some accepted standard) for the sidelink-based positioning procedure POS-PROC-SL, b) instructing 412, by the network device 10, at least one further terminal device, e.g. the at least one further terminal device 30, 30' (e.g., anchor terminal device, as e.g. defined by some accepted standard), that may at least temporarily be used as a reference terminal device for the sidelink-based positioning procedure POS-PROC-SL, to perform at least one of: b1) transmitting, for example repeatedly, for example periodically, discovery signals TX-DISC-SIG for a discovery procedure associated with the first terminal device 20, b2) preparing PREP-DISC for a, for example on-demand, discovery for a discovery procedure associated with the first terminal device 20, c) transmitting 414, by the network device 10, discovery configuration information I-DISC-CFG characterizing a configuration for a discovery procedure for the sidelink-based positioning procedure POS-PROC-SL, d) verifying 416, by the network device 10, a capability 30-CAPAB-SL-POS of at least one further terminal device 30, 30' for a sidelink-based positioning procedure POS-PROC-SL.

In some exemplary embodiments, Fig. 4, the first information 1-1 comprises at least one of the following elements: a) resources RES-DIR-DISC for a sidelink-based direct discovery, b) a periodicity PERIOD-RES-DIR-DISC of the resources RES-DIR-DISC for the sidelink-based direct discovery, c) a sidelink switching time SL-SW-TIME characterizing a switching time associated with sidelink transmissions, d) a time gap TIM-GAP characterizing a time which the terminal device is active performing the positioning procedure, e) a periodicity PERIOD-TIM-GAP associated with the time gap TIM-GAP, f) a scheme SCHEME-SL-POS for the sidelink-based positioning procedure POS-PROC-SL, e.g. indicating whether relative positions and/or absolute positions are considered for the sidelink-based positioning procedure POS-PROC-SL, g) resources RES-POS-PROC-SL for the sidelink-based positioning procedure, h) pattern information PAT-INF characterizing a pattern of at least one reference signal for the sidelink-based positioning procedure POS-PROC-SL, i) configuration information CFG-INF-RS associated with a pattern of at least one reference signal for the sidelink-based positioning procedure POS-PROC-SL, e.g. other than the pattern information PAT-INF.

In some exemplary embodiments, Fig. 4, the first information 1-1 may e.g. be transmitted to at least one terminal device 20, 30, 30' using at least one of: a) level 1 (L1) signaling, b) level 2 (L2) signaling.

Further exemplary embodiments, Fig. 2, relate to an apparatus 100, for example for a network device, e.g. gNB, 10 for performing the method according to the embodiments, e.g. as defined by at least one of the claims 1 to 4 and/or as exemplarily explained above with respect to Fig. 1 to 4.

Further exemplary embodiments, Fig. 2, relate to an apparatus 100a, for example for a network device, e.g. gNB, 10 comprising means 102a for performing the method according to the embodiments, e.g. as defined by at least one of the claims 1 to 4 and/or as exemplarily explained above with respect to Fig. 1 to 4.

In some exemplary embodiments, the apparatus 100, 100a and/or its functionality may e.g. be provided within the network device 10. In some exemplary embodiments, the apparatus 100, 100a and/or its functionality may e.g. be provided outside of the network device 10, e.g. in form of a, for example separate, device, that may e.g. be at least temporarily coupled with the network device 10.

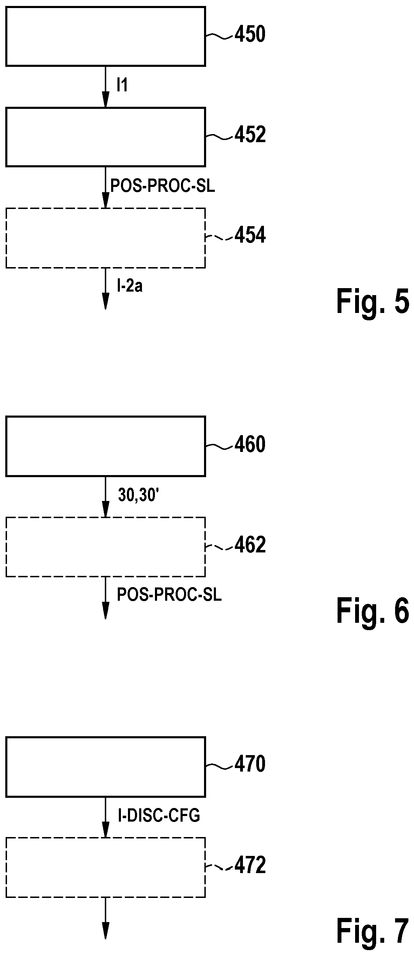

Further exemplary embodiments, Fig. 5, relate to a method, for example a computer-implemented method, comprising: receiving 450, by a first terminal device 20 (Fig. 2), a first information 1-1 from a network device 10, the first information 1-1 instructing the first terminal device 20 to perform at least one sidelink-based positioning procedure POS-PROC-SL associated with at least one further terminal device 30, 30', performing 452 (Fig. 5), by the first terminal device 20, the at least one sidelink-based positioning procedure POS-PROC-SL associated with the at least one further terminal device 30, 30', e.g. based on the first information 1-1.

In some exemplary embodiments, the first terminal device 20 may e.g. be a terminal device a position of which is to be determined, e.g. a target terminal device, e.g. target UE, e.g. according to some accepted standard.

In some exemplary embodiments, Fig. 5, the method comprises: transmitting 454, by the first terminal device 20, second information 1-2, I-2a, for example at least a part I-2a of the second information 1-2, to the network device 10, the second information I-2, I-2a characterizing at least one result of the at least one sidelink-based positioning procedure POS-PROC-SL. This way, in some exemplary embodiments, results as obtained by the first terminal device 20 associated with the at least one sidelink-based positioning procedure POS-PROC-SL may be provided to the network device 10.

In some exemplary embodiments, Fig. 6, the method comprises determining 460, by the first terminal device 20, the at least one further terminal device 30, 30', e.g. in a communication range of the first terminal device 20, e.g. so that sidelink communication, e.g. for the at least one sidelink-based positioning procedure POS-PROC-SL may be established.

In some exemplary embodiments, the optional block 462 symbolizes using, e.g. by the first terminal device 20, the at least one further terminal device 30, 30', as e.g. determined by block 460, e.g. for sidelink-based positioning, e.g. for the at least one sidelink-based positioning procedure POS-PROC-SL, as e.g. instructed by the network device 10 using the first information 1-1.

In some exemplary embodiments, Fig. 7, the method comprises receiving 470, by the first terminal device 20, discovery configuration information I-DISC-CFG characterizing a configuration for a discovery procedure for the sidelink-based positioning procedure POS-PROC-SL.

In some exemplary embodiments, the optional block 472 symbolizes using, e.g. by the first terminal device 20, the discovery configuration information I-DISC-CFG, e.g. for the discovery procedure for the sidelink-based positioning procedure POS-PROC-SL.

In some exemplary embodiments, the first information I-1 as e.g. mentioned in Fig. 5 comprises at least one of the following elements a) to i) as already explained above with respect to Fig. 4.

Further exemplary embodiments, Fig. 2, relate to an apparatus 200, for example for a first terminal device 20, for performing the method according to the embodiments, e.g. as defined by at least one of the claims 7 to 11 and/or as exemplarily explained above with respect to Fig. 4 to 7.

Further exemplary embodiments, Fig. 2, relate to an apparatus 200a, for example for a first terminal device 20, comprising means 202a for performing the method according the embodiments, e.g. as defined by at least one of the claims 7 to 11 and/or as exemplarily explained above with respect to Fig. 4 to 7.

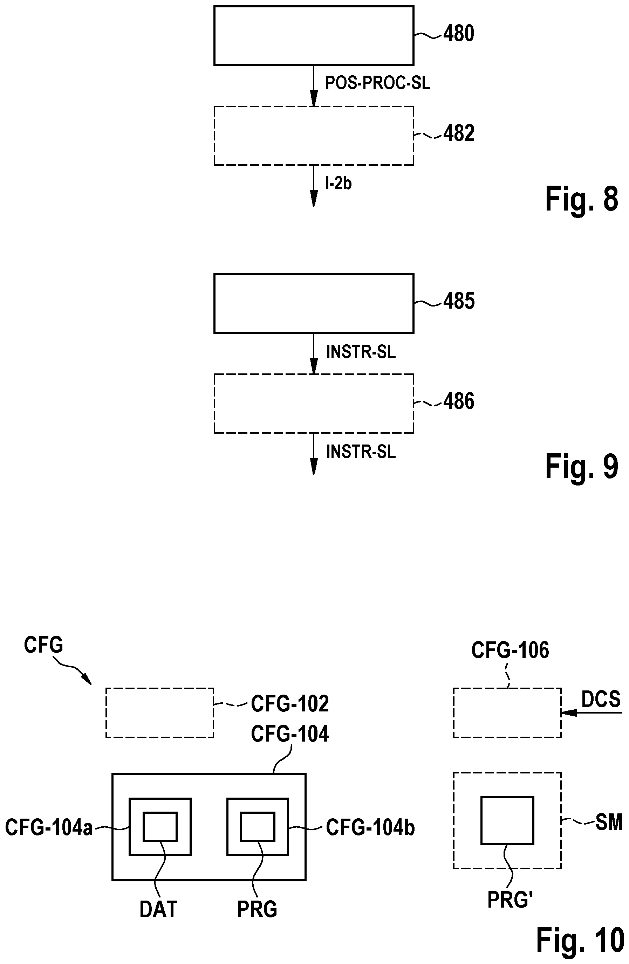

Further exemplary embodiments, Fig. 8, relate to a method, for example a computer-implemented method, comprising at least one of a) at least temporarily supporting 480, by at least one terminal device 30, 30', for example by at least one further terminal device 30, 30', a first terminal device 20 in performing 452 (Fig. 5) at least one sidelink-based positioning procedure POS-PROC-SL associated with the at least one terminal device 20, for example associated with the at least one further terminal device 30, 30', b) transmitting 482 (Fig. 8), by the at least one terminal device, for example by the at least one further terminal device 30, 30', second information I-2, I-2a, for example at least a part I-2a of the second information I-2, I-2a, to a network device 10, the second information I-2, I-2a characterizing at least one result of the at least one sidelink-based positioning procedure POS-PROC-SL. This way, in some exemplary embodiments, results as obtained by the at least one further terminal device 30, 30' associated with the at least one sidelink-based positioning procedure POS-PROC-SL may be provided to the network device 10.

In some exemplary embodiments, the second information I-2, I-2a, I-2b may e.g. be transmitted, e.g. to the network device 10, using at least one of: a) level 1 (L1) signaling, b) level 2 (L2) signaling.

In some exemplary embodiments, Fig. 2, the at least one terminal device, e.g. the at least one further terminal device 30, 30', may e.g. be a terminal device a (for example absolute or at least relative) position of which is known, e.g. a reference terminal device, e.g. reference UE, e.g. anchor terminal device, e.g. anchor UE 30, 30', e.g. according to some accepted standard.

In some exemplary embodiments, Fig. 9, the method comprises: receiving 485, by the at least one terminal device, for example by at least one further terminal device 30, 30', sidelink-related instructions INSTR-SL, e.g. from a network device 10, the sidelink-related instructions INSTR-SL instructing the at least one terminal device 30, 30' to perform at least one of: a) a sidelink positioning direct discovery procedure, b) a sidelink positioning procedure POS-PROC-SL, c) transmitting, for example repeatedly, for example periodically, transmitting sidelink discovery signals, d) preparing for an on-demand transmission of discovery signals, wherein for example the method further comprises controlling 486 an operation of the at least one terminal device, for example of the at least one further terminal device 30, 30', e.g. based on the sidelink-related instructions INSTR-SL.

Further exemplary embodiments, Fig. 2, relate to an apparatus 300, for example for a terminal device, for example for at least one further terminal device 30, 30', for performing the method according to the embodiments, e.g. as defined by at least one of the claims 14 to 15 and/or as exemplarily explained above with respect to Fig. 8 to 9.

Further exemplary embodiments, Fig. 2, relate to an apparatus 300a, for example for a terminal device, for example for at least one further terminal device 30, 30', comprising means 302a for performing the method according the embodiments, e.g. as defined by at least one of the claims 14 to 15 and/or as exemplarily explained above with respect to Fig. 8 to 9.

Further exemplary embodiments, Fig. 2, relate to a wireless, for example cellular, communication system 1000 comprising at least one apparatus 100, 100a, 200, 200a, 300, 300a according to the embodiments and/or at least one of the following elements: a) a network device 10, b) a first terminal device 10, e.g. target UR, c) a further terminal device 30, 30', e.g. reference UE, e.g. anchor UE.

Fig. 10 schematically depicts a simplified block diagram of a configuration CFG according to further exemplary embodiments. In some exemplary embodiments, the depicted configuration CFG may e.g. be used for implementing at least one of the apparatus 100, 100a, 200, 200a, 300, 300a according to the embodiments.

In some exemplary embodiments, the configuration CFG comprises at least one calculating unit, e.g. processor, CFG-102 and at least one memory unit CFG-104 associated with (i.e., usably by) the at least one calculating unit CFG-102, e.g. for at least temporarily storing a computer program PRG and/or data DAT, wherein the computer program PRG is e.g. configured to at least temporarily control an operation of the configuration CFG, e.g. for (e.g., within) at least one apparatus 100, 100a, 200, 200a, 300, 300a, such as e.g. the execution of a method according to some exemplary embodiments.

In some exemplary embodiments, the at least one calculating unit CFG-102 comprises at least one core (not shown) for executing the computer program PRG or at least parts thereof, e.g. for executing the method according to the embodiments or at least one or more steps and/or other aspects thereof.

According to further exemplary embodiments, the at least one calculating unit CFG-102 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further exemplary embodiments, the memory unit CFG-104 comprises at least one of the following elements: a volatile memory CFG-104a, e.g. a random-access memory (RAM), a non-volatile memory CFG-104b, e.g. a Flash-EEPROM.

In some exemplary embodiments, the computer program PRG is at least temporarily stored in the non-volatile memory CFG-104b. Data CFG-DAT (e.g. associated with the first information I-1 and/or the second information I-2 and the like), which may e.g. be used for executing the method according to some exemplary embodiments, may at least temporarily be stored in the RAM CFG-104a.

In some exemplary embodiments, an optional computer-readable storage medium SM comprising instructions, e.g. in the form of a further computer program PRG', may be provided, wherein the further computer program PRG', when executed by a computer, i.e. by the calculating unit CFG-102, may cause the computer CFG-102 to carry out the method according to the embodiments. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some exemplary embodiments, the configuration CFG may comprise an optional data interface CFG-106, e.g. for bidirectional data exchange with an external device (not shown). As an example, by means of the data interface CFG-106, a data carrier signal DCS may be received, e.g. from the external device, for example via a wired or a wireless data transmission medium, e.g. over a (virtual) private computer network and/or a public computer network such as e.g. the Internet.

In some exemplary embodiments, the data carrier signal DCS may represent or carry the computer program PRG, PRG' according to the embodiments, or at least a part thereof.

Further exemplary embodiments relate to a computer program PRG, PRG' comprising instructions which, when the program is executed by a computer CFG-102, cause the computer CFG-102 to carry out the method according to the embodiments.

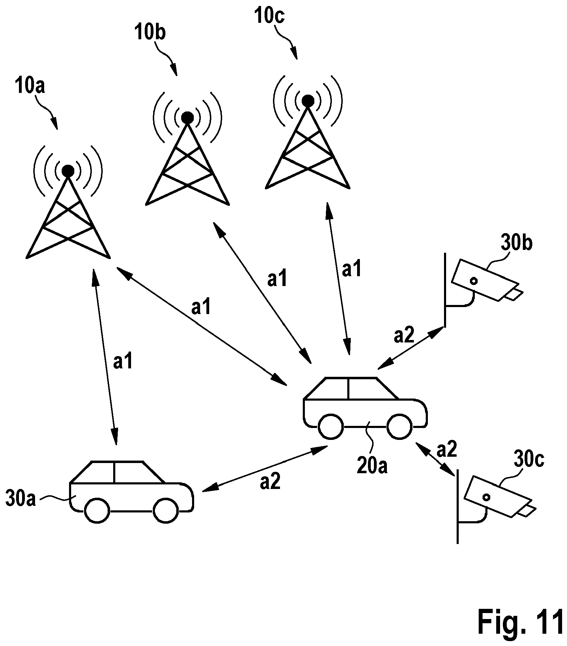

Fig. 11 schematically depicts a simplified scenario according to exemplary embodiments. Depicted are exemplary network devices, e.g. gNB, 10a, 10b, 10c, which may e.g. perform Uu-based positioning of one or more terminal devices, see for example reference sign POS-PROC-1 of Fig. 2 and the exemplary double arrows a1 of Fig. 11 symbolizing positioning reference signals, e.g. according to some accepted standard, e.g. for the Uu-based positioning. The double arrows a2 exemplarily symbolize sidelink positioning reference signals, which, in some exemplary embodiments, may be used by at least some of the terminal devices 20a (exemplarily symbolized by a vehicle), 30a (exemplarily symbolized by a vehicle), 30b, 30c (exemplarily symbolized by cameras). As an example, in some exemplary embodiment, the vehicle or terminal device 20a may e.g. at least temporarily represent a target UE a position of which is to be determined, and the further terminal devices 30a, 30b, 30c may e.g. at least temporarily represent anchor UEs a position of which is known. In some exemplary embodiments, the anchor UE 30a may have a known, e.g. verified, position. In some exemplary embodiments, the anchor UEs 30b, 30c may have a known, fixed position.

In some exemplary embodiments, for the exemplary scenario of Fig. 11, at least one of the network devices 10a, 10b, 10c may employ a method according to exemplary embodiments, e.g. transmitting the first information 1-1, also see, for example, block 404 of Fig. 1, e.g. to at least one of the UEs 20a, 30a, 30b, 30c, e.g. if a Uu-based position as e.g. determined by at least one of the network devices 10a, 10b, 10c based on the Uu-based positioning procedure is not precise enough, wherein by transmitting the first information I-1 a sidelink-based positioning procedure POS-PROC-SL may e.g. be requested by at least one of the network devices 10a, 10b, 10c. In other words, in some exemplary embodiments, at least one of the network devices 10a, 10b, 10c may e.g. trigger the sidelink-based positioning procedure POS-PROC-SL, e.g. using a position as obtained by the sidelink-based positioning procedure POS-PROC-SL, e.g. instead of a (potentially not sufficiently precise) position as e.g. determined by another, e.g. Uu-based, position procedure POS-PROC-1.

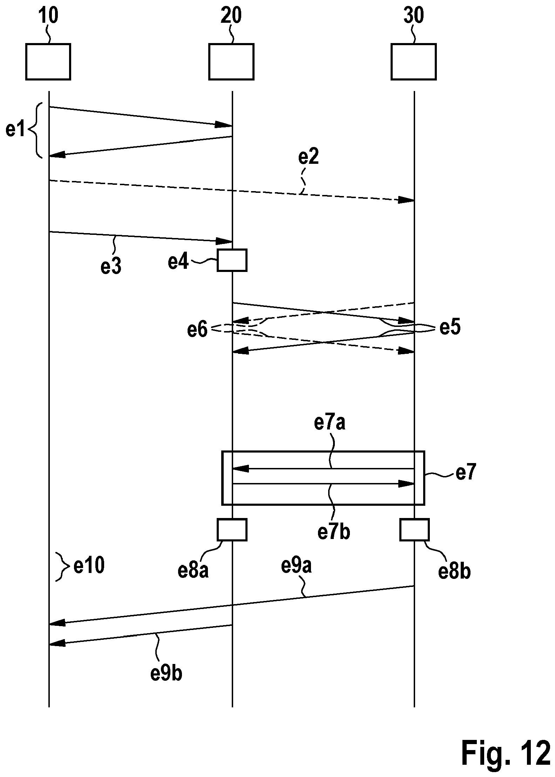

Fig. 12 schematically depicts a simplified signaling diagram according to exemplary embodiments, wherein exemplary aspects of signals with respect to the following components are explained: a) a network device, e.g. gNB, 10, b) a target UE 20, c) an anchor UE 30.

Element e1 exemplarily symbolizes a Uu-based positioning procedure, e.g. similar to optional block 400 of Fig. 1.

Element e2 exemplarily symbolizes an optional downlink configuration discovery trigger, e.g. an information that may be transmitted from the gNB 10 to at least one (potential) anchor UE, e.g. to prepare the at least one (potential) anchor UE for a future discovery process, e.g. for sidelink positioning.

Element e3 exemplarily symbolizes a request for sidelink-based positioning, e.g. similar or identical to a transmission of the first information 1-1, see for example block 404 of Fig. 1. In other words, in some exemplary embodiments, transmitting 404 the first information I-1 by the network device 10 to a UE 20 may e.g. represent requesting sidelink-based positioning associated with the UE 20.

Element e4 exemplarily symbolizes the UE 20 switching to a, for example next, sidelink-based positioning opportunity.

Element e5, i.e. the two arrows from target UE 20 to anchor UE 30 and from anchor UE 30 to target UE 20, exemplarily symbolize(s) the target UE 20 performing a neighbor discovery and/or detection, e.g. for detecting the one or more anchor UEs 30.

In some exemplary embodiments, the target UE 20 may have a, for example compiled, list of possible candidate anchor UEs 30, ..., and in some exemplary embodiments, the target UE 20 may reach out to these anchor UEs 30, ..., e.g. for the sidelink-based positioning. In some exemplary embodiments, the list of possible candidate anchor UEs 30, ..., may e.g. be provided from the network side, e.g. by gNB 10, to the target UE 20. In some exemplary embodiments, the list of possible candidate anchor UEs 30, ..., may e.g. be determined and/or maintained by the target UE 20 itself, e.g. from preceding discovery and/or positioning procedures.

In some exemplary embodiments, a discovery procedure may e.g. be initiated by the anchor UE 30, which is symbolized by arrows e6 in Fig. 12. In some exemplary embodiments, it may e.g. be configured by the network, e.g. gNB 10, and/or it may e.g. be pre-configured (or, for example, predetermined, e.g. by standardization), whether the discovery procedure may e.g. be initiated by the anchor UE 30.

Element e7 exemplarily symbolizes a sidelink-based positioning procedure associated with the UEs 20, 30, wherein the individual arrows e7a, e7b e.g. symbolize sidelink positioning reference signals as may e.g. be transmitted by the UEs 20, 30.

Elements e8a, e8b exemplarily symbolize optional sidelink positioning measurement "gaps", e.g. time delays, which, in some exemplary embodiments, may e.g. be caused by a transceiver hardware of the UEs 20, 30 switching between sidelink communication, e.g. for the sidelink positioning, e.g. over a PC5 interface according to some accepted standard, and a communication with the network device 10, e.g. over a Uu interface according to some accepted standard.

In some exemplary embodiments, the optional sidelink positioning measurement gaps e8a, e8b may be equal to each other. In some exemplary embodiments, the optional sidelink positioning measurement gaps e8a, e8b may be different from each other. In some exemplary embodiments, there may potentially be no substantial sidelink positioning measurement gap e8a, e8b at all, e.g. if the UEs 20, 30 are equipped with distinct transceiver hardware for the different communication directions (sidelink vs. uplink/downlink).

Element e9a exemplarily symbolizes a transmission of a result of the sidelink based positioning e7 as obtained by the anchor UE 30, e.g. using configured and/or granted resources. In some exemplary embodiments, the result e9a may e.g. characterize at least one of a) ranging information (e.g., for example exact, ranging values), and b) ranging assisting information. In some exemplary embodiments, the result e9a may e.g. correspond with or be similar to the part I-2b of the second information I-2 as exemplarily mentioned above, see for example Fig. 2, 8.

Element e9b (Fig. 12) exemplarily symbolizes a transmission of a result of the sidelink based positioning e7 as obtained by the target UE 20, e.g. using configured and/or granted resources. In some exemplary embodiments, the result e9b may e.g. characterize at least one of a) ranging information (e.g., for example exact, ranging values), and b) ranging assisting information, and c) information characterizing neighbor UE as e.g. determined by the target UE 20, e.g. in the course of the discovery procedure e6. In some exemplary embodiments, the result e9b may e.g. correspond with or be similar to the part I-2a of the second information I-2 as exemplarily mentioned above, see for example Fig. 2, 5.

Element e10 exemplarily symbolizes a delay margin characterizing a time interval between the optional sidelink positioning measurement gaps e8a, e8b and the transmission(s) e9a, e9b.

In the following, further aspects and advantages according to further exemplary embodiments are provided, which, in some exemplary embodiments, may be combined with each other and/or with at least one of the exemplary aspects explained above.

In some exemplary embodiments, the network, e.g. network device, e.g. gNB 10 may identify that one or more positioning requirements cannot be met using Uu-based positioning POS-PROC-1 (Fig. 1), wherein the network, e.g. network device, e.g. gNB 10, may e.g. request one or more UEs 20 (Fig. 12) with sidelink (SL) positioning capabilities to perform SL positioning measurements.

In some exemplary embodiments, a possible signaling procedure may comprise one or more of the following exemplary aspects:
In some exemplary embodiments, the gNB 10 may perform Uu-based positioning, wherein the gNB 10 or network 1000 may try to localize, e.g. using positioning reference signals, PRS, and e.g. supported positioning techniques, e.g. according to some accepted standard, the target UE 20.

In some exemplary embodiments, e.g. when the network 1000, e.g. gNB 10 (e.g., as a network-side entity, e.g. representing the network 1000, according to exemplary embodiments), determines, e.g. notes, that the Uu-based positioning was either nor successful and/or accuracy requirements were not met, a sidelink positioning according to further exemplary embodiment may be performed, e.g. "on top" of the Uu-based positioning.

In some exemplary embodiments, the network 1000, e.g. gNB 10, instructs the target UE 20 to discover neighbors, which e.g. have been previously identified, e.g. by the gNB 10, e.g. as potential, e.g. ready, reference UEs, and which, in some exemplary embodiments, may e.g. have been instructed (e.g., by the gNB 10) either to send periodic discovery or to be ready for on-demand discovery transmission.

In some exemplary embodiments, the network 1000, e.g. gNB 10, provides the target UE 20, i.e. the UE to be localized, with discovery configuration, e.g. using group signaling and/or dedicated signaling, e.g. for discovery.

In some exemplary embodiments, a terminal device 20, e.g. UE, may at least temporarily assume the role of a reference UE, e.g. anchor UE.

In some exemplary embodiments, a reference UE may e.g. be a UE with, for example exact, known position, i.e, either via geo-location information and/or via dedicated Uu signaling, e.g. for being declared as a "reference UE".

In some exemplary embodiments, a reference UE (e.g., with known and/or verified position) may be and/or may have been instructed by the network, e.g. gNB 10, to perform at least one of the following aspects related to discovery:
a) periodic direct discovery, wherein e.g. the reference UE 20 has scheduled known resources (e.g., time and/or frequency and/or period) and wherein the reference UE 20 may use at least some of these known resources, e.g. to broadcast, e.g. at least one, e.g. pre-configured, UE direct discovery message (which may e.g. be different from that of relay discovery messages, i.e., positioning discovery)
b) transmitting on demand discovery messages, wherein the reference UE 30 may e.g. receive at least one dedicated message,
c) transmitting on demand discovery messages, where the reference UEs 30, 30' (e.g. all reference UEs 30, 30' in the network 1000 (Fig. 2) vicinity) may receive a dedicated message and/or a group common message, e.g. originated from the network 1000 and/or gNB 10, e.g. to all/some of the reference UEs 30, 30', e.g. fulfilling the "known position" requirements and/or other requirements (e.g., being near to the target UE 20, e.g. if this is known to the network 1000).

In some exemplary embodiments, the target UE 20, i.e., the UE to be localized, may perform an identification of possible anchor UEs 30, e.g. in a communication range, e.g. based on at least one of e.g. several selected criteria ("aspect ALPHA"), e.g.: a) The reference UE(s) has(have) already declared its(their) capability for SL position to the network and being optionally conveyed again (e.g., implicitly) via discovery messages, b) The reference UE(s) has (have) received reference signals with RSRP (reference signal received power) exceeding a preconfigured threshold, c) The reference UE(s) has (have) a same synchronization source as the target UE 20, e.g., if the reference UE(s) broadcast(s) synchronization signals in the sidelink synchronization signal block, S-SSB, and broadcast channel, d) The reference UE(s) has (have) a synchronization source accepted by the target UE 20 fulfilling one or more acceptance criteria, e) The reference UE(s) is(are) declaring sidelink positioning reference signals, SL-PRS, being transmitted to a resource pool (e.g., either same or different resource pool than direct communication pool) being configured to the target UE, f) The reference UE(s) is(are) declaring its Layer 2-ID for further unicast, groupcast, or response to discovery messages.

In some exemplary embodiments, a capability of the, e.g. potential, reference UE(s), e.g. for SL positioning, is verified by the gNB 10, see also block 416 of Fig. 3.

In some exemplary embodiments, a terminal device, e.g. UE, e.g. reference UE 30, 30' is configured to declare, e.g. transmit, e.g. in a discovery message, at least one of the following elements: a) indication that it is capable of performing sidelink positioning, b) pointer to sidelink resource pool allowing sidelink positioning signaling.

In some exemplary embodiments, a terminal device, e.g. UE, e.g. reference UE 30, 30', is configured, e.g. able, to decode discovery messages of the reference UE and/or configured to, e.g. able to, do SL energy measurements, e.g., RSRP, etc. and, in some exemplary embodiments, check (e.g., if needed) a formerly transmitted sync source either via discovery messages or an earlier SSSB (sidelink synch signal blocks).

In some exemplary embodiments, a terminal device, e.g. UE, e.g. reference UE 30, 30', is configured, to identify positioning capabilities of other UEs, e.g. within a same resource pool.

In some exemplary embodiments, a terminal device, e.g. UE, e.g. anchor UE 30, 30', is configured to report its capabilities, e.g. to other UE.

In some exemplary embodiments, a terminal device, e.g. UE, e.g. anchor UE 30, 30', is configured to determine / know if it is an anchor/supporting UE, e.g. with known position.

In some exemplary embodiments, the first terminal device 20 (Fig. 12) may e.g. collect a plurality of possible candidate anchor UEs 30, 30', wherein, for example, the plurality may e.g. be organized in the form of a list or of a table.

In some exemplary embodiments, e.g. for enabling a comparatively precise sidelink positioning procedure, e.g. with a reduced signaling overhead (as e.g. compared to some conventional approaches), one or more of the following exemplary aspects A), B) may be provided, e.g. for known-to-network positions:
A) A target-UE-centric approach: where target UE(s) 20 are configured to select anchor UEs (e.g., reference UEs). I.e., in some exemplary embodiments, discovery is a procedure carried out by target UE 20, which is e.g. exemplarily depicted by Fig. 12. As an example, as e.g. already mentioned above, the network 1000 (e.g., via gNB 10) evaluates (e.g., first) UE positioning, e.g. via Uu interface (e.g., if possible, see the optional block 400 of Fig. 1), and, e.g. based on the output, e.g., accuracy, the network 1000, e.g. gNB 10, sends a SL positioning request, e.g. using the first information 1-1, to the target UE 20. In some exemplary embodiments, e.g. additionally, the gNB 10 may prepare one or more, e.g. potentially assisting UEs/Anchor UEs 30, 30', e.g. to be ready for discovery (see, for example, element e2 of Fig. 12). Alternatively, in some exemplary embodiments, one or more, e.g. all, anchor UEs 30, 30' can e.g. be pre-configured (e.g., initially or by definition, e.g. standardization). In some exemplary embodiments, furthermore, the target UE 20 is configured to perform neighbor discovery and/or detection (e.g., if potential candidate anchor UE are unknown to the network, out-of-coverage, etc., and are, for example, detected, e.g. exclusively, by the target UE 20) and may e.g. comprise a list of possible candidate anchor UEs 30, 30'. In some exemplary embodiments, the target UE 20 may e.g. reach out to the anchor UEs of the list (e.g., send out a trigger to the anchor UEs, e.g. to participate in the SL positioning procedure, i.e. asking the anchor UEs whether they have sidelink positioning capabilities and/or resources). Alternatively, in some exemplary embodiments, a discovery can e.g. be initiated by an anchor UE 30 (e.g., if configured by the network, e.g. gNB 10 or pre-configured).

It is to be noted that, for simplicity, a single anchor UE 30 is exemplarily depicted in Fig. 12. In some exemplary embodiments, there may be more than one anchor UE 30, 30' (Fig. 2), or more than two anchor UE 30, 30'.

In some exemplary embodiments, a the number of involved UE depends on, e.g., at least one of: a considered positioning technique, preferences of the target UE 20, whether ranging or positioning should be performed, whether a relative position or an absolute position should be determined, wherein, for example the latter may e.g. use existence of an anchor UE 30 with known (absolute) position.

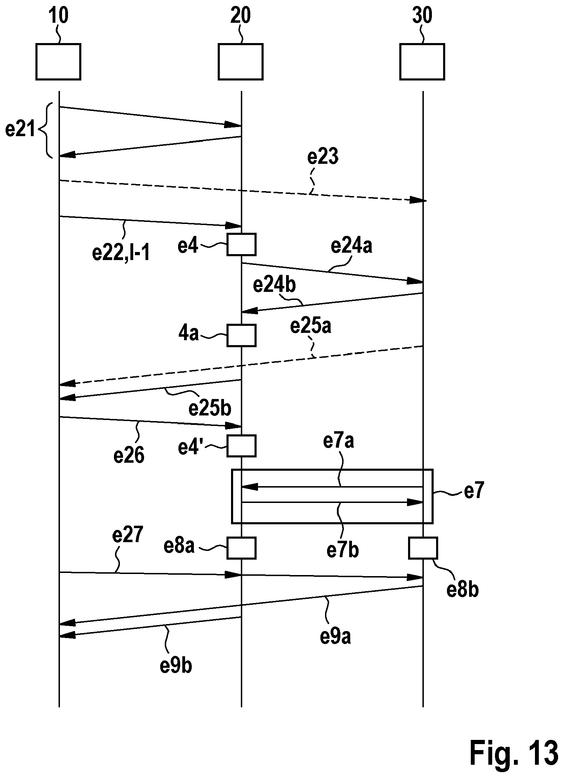

B) A network-centric anchor selection approach, wherein e.g. the network, e.g. gNB 10, is configured to select and/or instruct the target UE 20 and/or reference UEs 30, e.g. to indicate a deterministic discovery procedure, exemplary aspects of which are depicted by Fig. 13. Similar to element e1 of Fig. 12, element e21 of Fig. 13 symbolizes a possible Uu positioning with a target UE. In some exemplary embodiments, Fig. 13, the network, e.g. gNB 10, instructs the target UE 20, e.g. via a SL positioning request e22 (e.g. comprising the first information 1-1, see, for example, block 404 of Fig. 1, or at least similar to the first information 1-1), to switch to sidelink channel / (pre-)configured discovery sidelink pool and (pre-)configured positioning sidelink pool and start SL phase. Note that the elements e4, e8a, e8b of Fig. 13 correspond with elements e4, e8a, e8b of Fig. 12. In some exemplary embodiments, e.g. in a SL-phase/gap, the target UE 20 may scan and/or listen to one or more, for example all, possible discovery channels, e.g. selecting one or more reference UE 30, which e.g. fulfill one or more of the exemplary conditions mentioned above, see "aspect ALPHA".

In some exemplary embodiments, the first information I-1 (also see, for example, Fig. 1, block 404) may be used to form the SL positioning request e22 of Fig. 13 or the first information I-1 may be used as the SL positioning request e22 of Fig. 13.

In some exemplary embodiments, the SL positioning request e22 may e.g. comprise at least one of the following elements: a) SL direct discovery resources and (e.g., if possible) periodicity, b) SL switching time, c) SL gap, d) SL periodicity, e) SL positioning scheme (e.g., relative position and/or absolute position), f) SL positioning resources, g) SL-PRS pattern, h) further SL-PRS configurations.

In some exemplary embodiments, the anchor UE 30 is/are assumed to be previously/initially instructed, e.g. by the network, e.g. gNB 10, e.g. to perform SL positioning direct discovery and SL positioning, see, for example, element e23 of Fig. 13.

In some exemplary embodiments, the target UE 20 may transmit a discovery request e24a, which may e.g. be received by the anchor UE 30. In some exemplary embodiments, e.g. upon receipt of the discovery request e24a from the target UE 20, the anchor UE 30 may transmit a discovery response e24b.

In some exemplary embodiments, e.g. after receipt of the discovery response e24b from the anchor UE 30, the target UE 20 may switch to a Uu interface, see element e4a.

In some exemplary embodiments, element 25a symbolizes a sidelink positioning response transmitted from the anchor UE 30 to the gNB 10, e.g. via a Uu interface. In some exemplary embodiments, element 25b symbolizes a sidelink positioning response transmitted from the target UE 20 to the gNB 10, e.g. via a Uu interface. In some exemplary embodiments, e.g. element 25b may also comprise neighbor reporting as determined by the target UE 20. In some exemplary embodiments, at least one of the elements e25a, e25b is at least similar to the second information I-2 explained above.

In some exemplary embodiments, e.g. after receiving the sidelink positioning response(s) e25a, 25b (e.g., with optional neighbor reporting, e.g. by the target UE 20), the gNB may transmit a sidelink positioning confirmation e26, e.g. to the target UE 20, e.g. to instruct the target UE 20 to perform a sidelink-based positioning procedure e7, e.g. after switching e4', by the target UE 20, to a, for example next, sidelink positioning opportunity.

In some exemplary embodiments, e.g. optionally, the network, e.g. gNB 10, may trigger a SL direct discovery, e.g. from the anchor UE 30, e.g. based on demand signals, e.g. including possible time, frequency, and/or periodicity.

In some exemplary embodiments, element e27 symbolizes the gNB 10 transmitting downlink control information, DCI, to at least one of the target UE 20 and the anchor UE 30, the DCI e27 e.g. comprising at least one uplink resource allocation, e.g. for transmission(s) e9a, e9b by at least one of the UE 20, 30. In other words, in some exemplary embodiments, the transmission(s) e9a, e9b of Fig. 13 may e.g. be done in dynamic resources. By contrast, in some exemplary embodiments, the transmission(s) e9a, e9b of Fig. 12 may e.g. be done in configured resources.

In some exemplary embodiments, the network, e.g. gNB 10, may instruct (e.g., based on demand) multiple anchor UEs to initiate a positioning procedure to the same (or different) target UE 20 ("Option 1"), wherein a number of anchor UEs addressed by the network may e.g. differ, e.g. according to some conditions, e.g.: supported positioning technique, the preferences of the network, whether ranging or positioning should be performed.

In some exemplary embodiments, e.g. once an SL switching gap, which e.g. characterizes a time the UEs are busy with at least one of a) SL operation, b) SL measurements, c) SL transmission/reception elapses, either the target UE 20, the reference UE 30 ("Option 3"), or both UEs 20, 30, may transmit discovery results (e.g., in the form of layer 2 (L2) IDs of neighboring UEs), the exact ranging or absolute measurements and/or assisting measurement information report including preconfigured measurement values, see the elements e9a, e9b of Fig. 13.

In some exemplary embodiments, a reference UE 30, 30' may know its position, either:
- due to its known Geo-location information (known, e.g., from deployment), which, in some exemplary embodiments may be conveyed to the network via an interface,
- being known via a, for example conventional and/or existing, localization procedure (e.g., GNSS, existing sensors, etc.), where, in some exemplary embodiments, the respective localization procedure may be acknowledge by the network, e.g. gNB 10, and/or the positioning values may be approved and/or trusted by the network, e.g. gNB 10,
- being positioned via a, for example existing, Uu positioning mechanism (see, for example, block 400 of Fig. 1).

In some exemplary embodiments, a known position, e.g. of the reference UE 30, 30', may be conveyed to the target UE 20, e.g. by the gNB 10 and/or by the reference UE 30, 30', e.g. via positioning signaling. In some exemplary embodiments, this can be done to assist a UE-, e.g. sidelink, based localization, and/or to refine a computed assisting positioning information.

In some exemplary embodiments, the target UE 20 may, e.g. on its own (or being instructed by the network, e.g. gNB 10), select a multilateration, e.g. a positioning procedure involving more than one reference UE 30, 30'. In some exemplary embodiments, in case of multilateration, it may be easier to involve groupcast SL-PRS transmission, i.e., from a reference UE 30, e.g., based on discovery, or allocated by the gNB 10 (e.g., with discovery).

In some exemplary embodiments, a number of anchor UE and/or reference UE 30, 30' selected for SL-positioning may depend on at least one of: a) a required accuracy, b) instruction from the network side, e.g. by gNB 10, c) an outcome of a multilateration.

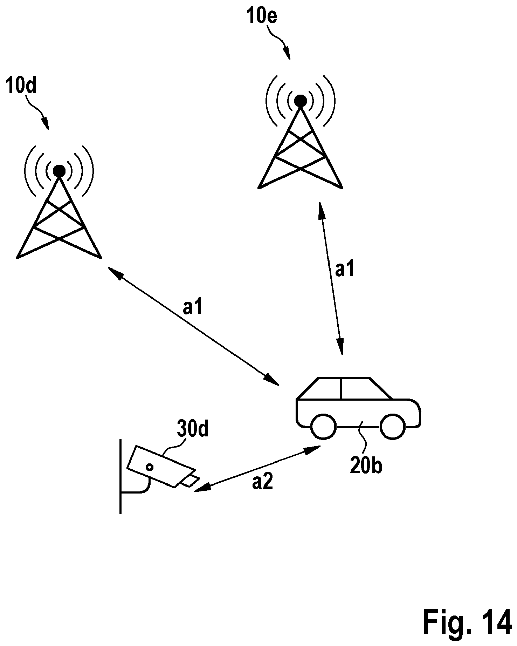

Fig. 14 schematically depicts a simplified scenario according to exemplary embodiments. Depicted are two gNB 10d, 10e, a mobile UE 20b and a, for example static, UE 30d. In some exemplary embodiments, the mobile UE 20b may at least temporarily assume the role of a target UE, and the UE 30d may at least temporarily assume the role of an anchor UE.

In some exemplary embodiments, it is assumed that a number of (the presently two) gNBs 10d, 10e participating e.g. in a Uu-based positioning procedure POS-PROC-1 (Fig. 1) is too limited, e.g. to allow for absolute positioning. Thus, in some exemplary embodiments, a procedure is proposed where an anchor UE 30d capable of performing sidelink ranging may be used in addition to the gNBs 10d, 10e. In some exemplary embodiments, this procedure may also be referred to as "hybrid" procedure, as, in some exemplary embodiments, aspects of Uu-based positioning and sidelink-based positioning may be at least temporarily combined.

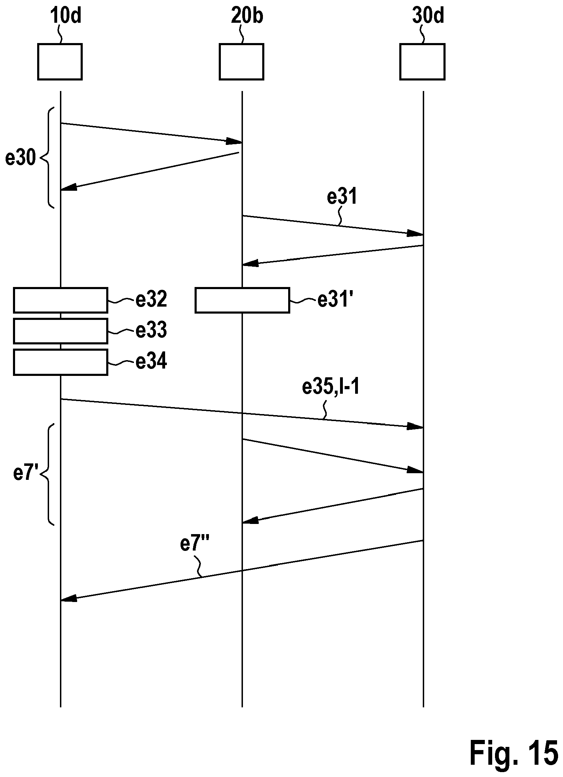

In this regard, Fig. 15 schematically depicts a simplified signaling diagram for the entities gNB 10d, target UE 20b, anchor UE 30d of Fig. 14.

In some exemplary embodiments, element e30 symbolizes a Uu-based positioning, where, for example, the network, e.g. via gNB 10d, tries to localize, e.g. the target UE 20b, e.g. using PRS signals and supported positioning techniques, e.g. according to some accepted standard. In some exemplary embodiments, element e31 symbolizes a neighbor identification procedure, as may e.g. be carried out by the target UE 20b in some exemplary embodiments, e.g. to discover the anchor UE 30d. In some exemplary embodiments, the neighbor identification procedure e31 may be performed by the anchor UE 20b upon initiative of the anchor UE 20b. In some exemplary embodiments, the neighbor identification procedure e31 may be performed by the anchor UE 20b upon being instructed to perform the neighbor identification procedure e31, e.g. by the gNB 10d.

In some exemplary embodiments, the network, e.g. gNB 10d, may determine, see element e32 of Fig. 15, that the positioning e30 was either not successful or accuracy requirements were not met.

In some exemplary embodiments, e.g. based on the determination e32, the network, e.g. gNB 10d, may determine, e33, to additionally perform a sidelink-based positioning procedure, e.g. associated with the UE 20b, 30d. In other words, in some exemplary embodiments, the sidelink-based positioning procedure may be performed "on top", i.e. additionally to, the, e.g. Uu-based, positioning procedure e30.

In some exemplary embodiments, e.g. based on the determination e32, the network, e.g. gNB 10d, may perform an anchor UE selection e34, e.g. based on information related to the neighbor identification procedure e31 (which information may also be transmitted by the target UE 20b to the gNB 10d, not shown in Fig. 15).

In some exemplary embodiments, the target UE 20b, i.e. the UE 20b to be localized, performs an identification e31' of possible anchor UEs in the communication range, e.g. based on the neighbor identification procedure e31.

In some exemplary embodiments, the target UE 20b a) is configured to perform sidelink positioning, b) has access to a sidelink resource pool allowing sidelink positioning, c) is configured to identify positioning capabilities of other UEs within the same resource pool.

In some exemplary embodiments, the anchor UE 30d a) is configured to report its capabilities, b) is configured to determine and/or signal if it is an anchor/supporting/reference UE, e.g. with known (absolute and/or relative) position.

In some exemplary embodiments, the target UE 20b determines one or more possible candidate anchor UEs 30d, which may e.g. be organized in the form of a list or table or the like.

In some exemplary embodiments, the network, e.g. via gNB 10d, transmits a positioning assistance request e35 to the anchor UE 30d, e.g. via L1 and/or L2 signaling, e.g. to instruct the anchor UE 30d to assist the target UE 20b with sidelink-based positioning, which, in some exemplary embodiments, may e.g. yield a higher precision than the, e.g. Uu-based, positioning e30.

In some exemplary embodiments, the positioning assistance request e35 may e.g. comprise the first information 1-1, see, for example, block 404 of Fig. 1, or may at least be similar to the first information 1-1.

In some exemplary embodiments, the first information I-1 may be used to form the positioning assistance request e35 or may be used as the positioning assistance request e35. In other words, in some exemplary embodiments, the anchor UE 30d of Fig. 15 may, at least in some cases, represent the first terminal device in the sense of Fig. 1, block 404, e.g. at least in that the anchor UE 30d receives the first information I-1 from the gNB 10d.

In some exemplary embodiments, e.g. in contrast to some exemplary embodiments associated with Fig. 13, the network, e.g. gNB 10d (Fig. 15), has the right to select the anchor UE(s) 30d, e.g. based on their indicated capabilities.

In some exemplary embodiments, it is possible that, e.g. the gNB 10d, considers only anchor UE 30d with known positions. In some exemplary embodiments, the anchor UEs 30d can be considered as Positioning Reference Units, e.g. similar to PRUs in Rel. 17 Uu-based positioning according to some accepted standard.

In some exemplary embodiments, the anchor UE 20b performs sidelink positioning e7', e.g. using S-PRS signals, and reports results, e.g. characterizing a determined distance between the target UE 20b and the anchor UE 30d back to the network, see arrow e7".

In some exemplary embodiments, the result e7" of Fig. 15 may e.g. correspond with or be similar to a part I-2b of the second information I-2 as exemplarily mentioned above, see for example Fig. 2, 8.

In some exemplary embodiments, as a result of the exemplary procedure according to Fig. 15, the network, e.g. gNB 10d, can use, e.g. put together, the measurements e7" (and optionally also measurements of the Uu-based procedure e30) and determine the position of the target UE 20b.

In some exemplary embodiments, the principle according to the embodiments may e.g. be used to extend existing communication protocols and/or standards, e.g. as an extension to at least one of an IEEE802.11p protocol for car-to-car communication, Industrial IoT communication and NR-V2X.

In some exemplary embodiments, the principle according to the embodiments may e.g. be used for the network 1000 to request at least one UE 20 to perform SL positioning, e.g. instead of Uu-based positioning, or to assist, e.g. refine, Uu-based positioning. As an example, in some exemplary embodiments, e.g. in case the network 1000 determines that positioning requirements cannot be met using e.g. Uu-based positioning, the network 1000 may identify one or more UEs 20, 30 with sidelink positioning capabilities, e.g. to request SL positioning measurements to be conducted.

In some exemplary embodiments, the principle according to the embodiments may e.g. be used for the network 1000 to request to assist a Uu-based positioning e30 (Fig. 15), e.g. by utilizing sidelink positioning anchor UEs 39d and respective sidelink ranging capabilities. In some exemplary embodiments, for Uu-based positioning a specific minimum number of gNBs participating in the positioning procedure is used. In some exemplary embodiments, a positioning accuracy can be improved, if more gNBs are involved. However, especially if the number of gNB is too limited, e.g. to allow to position the UE 20b (Fig. 15) at all, in some exemplary embodiments the network may involve anchor UEs 30d used for SL positioning, e.g. to achieve at least a minimum number of anchors, e.g. to obtain an absolute position of the target UE 20b. In some exemplary embodiments, anchor UEs 30d with fixed known locations may be used, which may e.g. be represented by a roadside unit, RSU, e.g. according to some accepted standard.

In some exemplary embodiments, the principle according to the embodiments enables to at least temporarily and/or at least partly address at least some of the following objects: a) General procedure for a solution to hybrid positioning, b) solution to allow positioning even for an insufficient number of gNBs in an Uu-based positioning scenario.

In some exemplary embodiments, the principle according to the embodiments enables to provide a possible radio access network procedure, e.g. using L1 signaling and/or L2 signaling, e.g. for network assisted sidelink positioning, e.g. a hybrid positioning approach considering both aspects of e.g. Uu-based positioning and aspects of e.g. PC5-based, e.g. sidelink, positioning.

In some exemplary embodiments, the principle according to the embodiments enables to provide a discovery mechanism, e.g. for hybrid positioning, e.g. including resources for discovery.

In some exemplary embodiments, the principle according to the embodiments enables to provide a multilateration procedure, e.g. for hybrid positioning, e.g. using sidelink discovery.

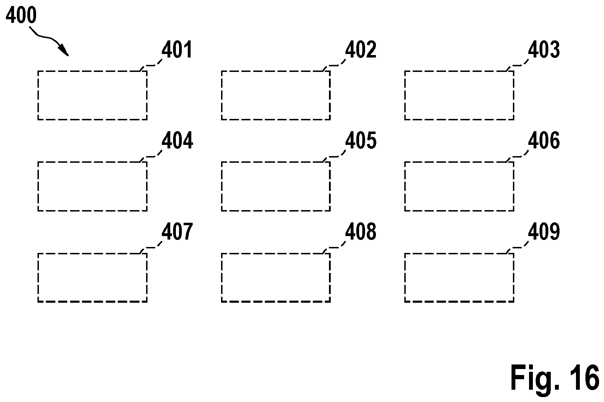

Further exemplary embodiments, Fig. 16, relate to a use 400 of the method according to the embodiments and/or of the apparatus 100, 100a, 200, 200a, 300, 300a according to the embodiments and/or of the communication system 1000, e.g. network 1000, (Fig. 2) according to the embodiments and/or of the computer program PRG, PRG' (Fig. 10) according to the embodiments and/or of the computer-readable storage medium SM according to the embodiments and/or of the data carrier signal DCS according to the embodiments for at least one of: a) performing 401 at least one sidelink-based positioning procedure POS-PROC-SL, b) assisting 402 a network device 10 in performing at least one positioning procedure POS-PROC-SL, c) validating 403 at least one positioning procedure POS-PROC-1 associated with a network device 10, e.g. based on the at least one sidelink-based positioning procedure POS-PROC-SL, d) increasing 404 a precision of at least one positioning procedure associated with a network device 10, e.g. based on the at least one sidelink-based positioning procedure POS-PROC-SL, e) performing 405 hybrid positioning associated with at least one network device 10 and at least one (further) terminal device 20, 30, 30', f) employing 406 sidelink ranging capabilities of at least one terminal device, e.g. for positioning, g) increasing 407 a flexibility of hybrid positioning associated with at least one network device 10 and at least one terminal device 20, 30, h) performing 408 on-demand sidelink-based positioning, e.g. upon request of at least one network device 10, i) providing 409 positioning capabilities to communications networks 1000, e.g. associated with car-to-car communication and/or communication of Industrial Internet of Things, IIoT, device and/or vehicle-to-X, V2X, communication.

## Claims

1. A method, for example a computer-implemented method, comprising: transmitting (404), by a network device (10), a first information (1-1) to a first terminal device (20; 30d), the first information (1-1) instructing the first terminal device (20; 30d) to perform at least one sidelink-based positioning procedure (POS-PROC-SL; e7; e7') associated with at least one further terminal device (30; 20), receiving (406) a second information (I-2) from at least one of a) the first terminal device (20) and b) the at least one further terminal device (30), the second information (I-2) characterizing at least one result of the at least one sidelink-based positioning procedure (POS-PROC-SL).

2. The method according to claim 1, comprising: performing (400), by the network device (10), at least one, for example non-sidelink based, positioning procedure (POS-PROC-1), e.g. based on an air interface associated with the network device (10) and the first terminal device (20), determining (402), based on the at least one, for example non-sidelink based, positioning procedure (POS-PROC-1), at least one of: a) the at least one, for example non-sidelink based, positioning procedure (POS-PROC-1) was not successful (DET-1), b) at least one accuracy requirement was not met (DET-2) by the at least one, for example non-sidelink based, positioning procedure (POS-PROC-1).

3. The method according to any of the preceding claims, comprising at least one of the following aspects: a) determining (410), by the network device (10), at least one further terminal device (30, 30') that may at least temporarily be used as a reference terminal device for the sidelink-based positioning procedure (POS-PROC-SL), b) instructing (412), by the network device (10), at least one further terminal device (30, 30'), e.g. the at least one further terminal device (30, 30'), that may at least temporarily be used as a reference terminal device for the sidelink-based positioning procedure (POS-PROC-SL), to perform at least one of: b1) transmitting (TX-DISC-SIG), for example repeatedly, for example periodically, discovery signals for a discovery procedure associated with the first terminal device (20), b2) preparing (PREP-DISC) for a, for example on-demand, discovery for a discovery procedure associated with the first terminal device (20), c) transmitting (414), by the network device (10), discovery configuration information (I-DISC-CFG) characterizing a configuration for a discovery procedure for the sidelink-based positioning procedure (POS-PROC-SL), d) verifying (416), by the network device (10), a capability (30-CAPAB-SL-POS) of at least one further terminal device (30, 30') for a sidelink-based positioning procedure (POS-PROC-SL).

4. The method according to any of the preceding claims, wherein the first information (1-1) comprises at least one of the following elements: a) resources (RES-DIR-DISC) for a sidelink-based direct discovery, b) a periodicity (PERIOD-RES-DIR-DISC) of the resources (RES-DIR-DISC) for the sidelink-based direct discovery, c) a sidelink switching time (SL-SW-TIME) characterizing a switching time associated with sidelink transmissions, d) a time gap (TIM-GAP) characterizing a time which the terminal device is active performing the positioning procedure, e) a periodicity (PERIOD-TIM-GAP) associated with the time gap (TIM-GAP), f) a scheme (SCHEME-SL-POS) for the sidelink-based positioning procedure (POS-PROC-SL), e.g. indicating whether relative positions and/or absolute positions are considered for the sidelink-based positioning procedure (POS-PROC-SL), g) resources (RES-POS-PROC-SL) for the sidelink-based positioning procedure (POS-PROC-SL), h) pattern information (PAT-INF) characterizing a pattern of at least one reference signal for the sidelink-based positioning procedure (POS-PROC-SL), i) configuration information (CFG-INF-PRS) associated with a pattern of at least one reference signal for the sidelink-based positioning procedure (POS-PROC-SL), e.g. other than the pattern information (PAT-INF).

5. An apparatus (100), for example for a network device (10), for performing the method according to at least one of the preceding claims.

6. An apparatus (100a), for example for a network device (10), comprising means (102a), for performing the method according to at least one of the preceding claims.

7. A method, for example a computer-implemented method, comprising: receiving (450), by a first terminal device (20), a first information (1-1) from a network device (10), the first information (1-1) instructing the first terminal device (20) to perform at least one sidelink-based positioning procedure (POS-PROC-SL) associated with at least one further terminal device (30), performing (452), by the first terminal device (20), the at least one sidelink-based positioning procedure (POS-PROC-SL) associated with the at least one further terminal device (30), e.g. based on the first information (1-1).

8. The method according to claim 7, comprising: transmitting (454), by the first terminal device (20), second information (I-2; I-2a), for example at least a part (I-2a) of the second information (I-2), to the network device (10), the second information (I-2; I-2a) characterizing at least one result of the at least one sidelink-based positioning procedure (POS-PROC-SL).

9. The method according to any of the claims 7 to 8, comprising: determining (460), by the first terminal device (20), the at least one further terminal device (30, 30'), e.g. in a communication range of the first terminal device (20).

10. The method according to any of the claims 7 to 9, comprising: receiving (470), by the first terminal device (10), discovery configuration information (I-DISC-CFG) characterizing a configuration for a discovery procedure for the sidelink-based positioning procedure (POS-PROC-SL).

11. The method according to any of the claims 7 to 10, wherein the first information (1-1) comprises at least one of the following elements: a) resources (RES-DIR-DISC) for a sidelink-based direct discovery, b) a periodicity (PERIOD-RES-DIR-DISC) of the resources (RES-DIR-DISC) for the sidelink-based direct discovery, c) a sidelink switching time (SL-SW-TIME) characterizing a switching time associated with sidelink transmissions, d) a time gap (TIM-GAP) characterizing a time which the terminal device is active performing the positioning procedure, e) a periodicity (PERIOD-TIM-GAP) associated with the time gap (TIM-GAP), f) a scheme (SCHEME-SL-POS) for the sidelink-based positioning procedure (POS-PROC-SL), e.g. indicating whether relative positions and/or absolute positions are considered for the sidelink-based positioning procedure (POS-PROC-SL), g) resources (RES-POS-PROC-SL) for the sidelink-based positioning procedure (POS-PROC-SL), h) pattern information (PAT-INF) characterizing a pattern of at least one reference signal for the sidelink-based positioning procedure (POS-PROC-SL), i) configuration information (CFG-INF-PRS) associated with a pattern of at least one reference signal for the sidelink-based positioning procedure (POS-PROC-SL), e.g. other than the pattern information (PAT-INF).

12. An apparatus (200), for example for a first terminal device (20), for performing the method according to at least one of the claims 7 to 11.

13. An apparatus (200a), for example for a first terminal device (20), comprising means (202a), for performing the method according to at least one of the claims 7 to 11.

14. A method, for example a computer-implemented method, comprising at least one of a) at least temporarily supporting (480), by at least one terminal device (30; 30'), for example by at least one further terminal device (30; 30'), a first terminal device (20) in performing at least one sidelink-based positioning procedure (POS-PROC-SL) associated with the at least one terminal device (30), for example associated with the at least one further terminal device (30; 30'), b) transmitting (482), by the at least one terminal device (30; 30'), for example by the at least one further terminal device (30; 30'), second information (1-2; I-2b; e9a; e7"), for example at least a part (I-2b) of the second information (1-2), to a network device (10), the second information (I-2; I-2b) characterizing at least one result of the at least one sidelink-based positioning procedure (POS-PROC-SL).

15. The method according to claim 14, comprising: receiving (485), by the at least one terminal device (30; 30'), for example by at least one further terminal device (30; 30'), sidelink-related instructions (INSTR-SL), e.g. from a network device (10), the sidelink-related instructions (INSTR-SL) instructing the at least one terminal device (30; 30') to perform at least one of: a) a sidelink positioning direct discovery procedure, b) a sidelink positioning procedure, c) transmitting, for example repeatedly, for example periodically, transmitting sidelink discovery signals, d) preparing for an on-demand transmission of discovery signals, wherein for example the method further comprises controlling (486) an operation of the at least one terminal device (30; 30'), for example of the at least one further terminal device (30; 30'), based on the sidelink-related instructions (INSTR-SL).

16. An apparatus (300), for example for a terminal device (30; 30'), for example for at least one further terminal device (30; 30'), for performing the method according to at least one of the claims 14 to 15.

17. An apparatus (300a), for example for a terminal device (30; 30'), for example for at least one further terminal device (30; 30'), comprising means (302a), for performing the method according to at least one of the claims 14 to 15.

18. A communication system (1000) comprising at least one apparatus (100; 100a; 200; 200a; 300; 300a) according to any of the claims 5, 6, 12, 13, 16, 17.

19. A computer program (PRG; PRG') comprising instructions which, when the program (PRG; PRG') is executed by a computer (CFG-102), cause the computer (CFG-102) to carry out the method according to at least one of the claims 1 to 4, 7 to 11, 14 to 15.

20. A computer-readable storage medium (SM) comprising instructions (PRG') which, when executed by a computer (CFG-102), cause the computer (CFG-102) to carry out the method according to at least one of the claims 1 to 4, 7 to 11, 14 to 15.

21. A data carrier signal (DCS) carrying and/or characterizing the computer program (PRG; PRG;) of claim 19.

22. A use (400) of the method according to at least one of the claims 1 to 4 and/or 7 to 11 and/or 14 to 15 and/or of the apparatus (100; 100a; 200; 200a; 300; 300a) according to any of the claims 5, 6, 12, 13, 16, 17 and/or of the communication system (1000) according to claim 18 and/or of the computer program (PRG; PRG;) according to claim 19 and/or of the computer-readable storage medium (SM) according to claim 20 and/or of the data carrier signal (DCS) according to claim 21 for at least one of: a) performing (401) at least one sidelink-based positioning procedure (POS-PROC-SL), b) assisting (402) a network device (10) in performing at least one positioning procedure (POS-PROC-1), c) validating (403) at least one positioning procedure (POS-PROC-1) associated with a network device (10), e.g. based on the at least one sidelink-based positioning procedure (POS-PROC-SL), d) increasing (404) a precision of at least one positioning procedure (POS-PROC-1) associated with a network device (10), e.g. based on the at least one sidelink-based positioning procedure (POS-PROC-SL), e) performing (405) hybrid positioning associated with at least one network device (10) and at least one terminal device (10, 30, 30'), f) employing (406) sidelink ranging capabilities of at least one terminal device (10, 30, 30'), e.g. for positioning, g) increasing (407) a flexibility of hybrid positioning associated with at least one network device (10) and at least one terminal device (10, 30, 30'), h) performing (408) on-demand sidelink-based positioning upon request of at least one network device (10), i) providing (409) positioning capabilities to communications networks, e.g. associated with car-to-car communication and/or communication of Industrial Internet of Things, IIoT, device and/or vehicle-to-X, V2X, communication.
